# EUROPEAN PATENT APPLICATION

(11) **EP 1 442 799 A1**
(43) Date of publication of application: **04.08.2004**
(21) Application number: 02777857.0
(22) Date of filing: 16.10.2002
(51) Int. Cl.: B05D 7/14, C09D 5/00

(54) **PROCESS FOR COATING METALLIC BODIES AND PRIMER COMPOSITIONS TO BE USED IN THE PROCESS**

(30) Priority: 17.10.2001 JP 2001319876; 28.11.2001 JP 2001362187; 15.01.2002 JP 2002006172
(71) Applicant: KANSAI PAINT CO., LTD., Amagasaki-shi Hyogo 661-0964 (JP)
(72) Inventor: KASHIWADA, Seiji c/o, Kansai Paint Co, . Ltd., Hiratsuka-shi, Kanagawa 254-0016 (JP); Kitagawa Satomi, Westlake Ohio 44145 (US); OHKOSHI, Toshio c/o, Kansai Paint Co., Ltd., Nishikamo-gun, Aichi 470-0206 (JP); KATO, Yoshinori c/o, Kansai Paint Co., Ltd., Nishikamo-gun, Aichi 470-0206 (JP); HAYASE, Tohru c/o, Kansai Paint Co., Ltd., Nishikamo-gun, Aichi 470-0206 (JP); MIZUTANI, Makoto c/o, Kansai Paint Co., Ltd., Nishikamo-gun, Aichi 470-0206 (JP); ISHIKURA, Minoru c/o, Kansai Paint Co, . Ltd., Nishikamo-gun, Aichi 470-0206 (JP); ITOH, Hitoshi c/o, Kansai Paint Co, . Ltd., Shinagawa-ku, Tokyo 140-8520 (JP)
(74) Representative: Stuart, Ian Alexander
(86) International application number: PCT/JP2002/010734
(87) International publication number: WO 2003/033173

(57) **Abstract**

The present invention relates to metal object-coating method, which method comprises coating a primer composition (I) prepared by adding an inorganic anti-corrosive agent to at least one binder component selected from the group consisting of a binder component (A) containing an epoxy resin and at least one of amino resin and phenol resin, a binder component (B) containing a polyester resin, epoxy resin and phenol resin, and a binder component (C) containing α-olefin·α,β-ethylenically unsaturated carboxylic acid copolymer resin onto the surface of a metal object coating substrate to form a primer coating film layer, followed by coating a topcoat coating composition consisting of a thermoplastic resin based coating composition (II) onto the primer coating film layer to form a topcoat coating film layer consisting of a thermoplastic resin coating film layer; and the primer composition used in the method.

## Description

### Field of the Invention:

The present invention relates to a metal object-coating method, and more particularly to a metal object-coating method capable of forming a protective coating layer showing good properties in heat resistance, corrosion resistance and impact resistance onto a piping for use in an automobile brake oil or fuel, and many metal pipes arranged and used as a supply line such as an oiling and gas feeding for various kinds of machines, apparatuses, etc., and to a primer composition used in the method.

### Background Art:

Application of a protective coating onto an outer surface of the metal pipe is known in the art.

For the purpose of preventing damages due to rebounding stones, corrosion due to a road antifreezing agent such as a rock stone and damages due to contact between pipings on metal pipings for the automobile brake oil or fuel, which are arranged on an underfloor surface in the automobile body, a chromate coating film formed onto a galvanized steel pipe and aluminum pipe, followed by forming a coating film by use of a coating composition containing as a base resin a thermoplastic resin, for example, a vinyl fluoride resin based coating composition, vinylidene fluoride resin based coating composition, polyamide resin (nylon) based coating composition and the like (see, for example, Japanese Patent Application Laid-Open Nos. 286950/97, 262903/97 and 2002-3779).

However, in the case where the thermoplastic resin based coating composition is coated in the above coating system, poor adhesion properties of a coating film formed from the thermoplastic resin may produce problems such as peeling off on fabrication, development of cracks in the coating film layer by the impact due to rebounding stones, peeling off of the cracked coating film, resulting in seriously reducing corrosion resistance.

### Disclosure of the Invention:

It is an object of the present invention to provide a metal object-coating method capable of improving the adhesion properties of the thermoplastic resin coating film and keeping adhesion properties against to impact due to rebounding stones, and forming a protective coating layer showing good properties in heat resistance, corrosion resistance and impact resistance.

The present invention relates to a metal object-coating method, which method comprises coating a primer composition (I) prepared by adding an inorganic anti-corrosive agent to at least one binder component selected from the group consisting of a binder component (A) containing an epoxy resin and at least one of amino resin and phenol resin, a binder component (B) containing a polyester resin, epoxy resin and phenol resin, and a binder component (C) containing α-olefin · α,β-ethylenically unsaturated carboxylic acid copolymer resin onto the surface of a metal object coating substrate to form a primer coating film layer, followed by coating a topcoat coating composition consisting of a thermoplastic resin based coating composition (II), preferably a vinyl fluoride resin based coating composition, a vinylidene fluoride resin based coating composition or a polyamide resin based coating composition, onto the primer coating film layer to form a topcoat coating film layer consisting of a thermoplastic resin coating film; and a primer composition used in the method.

The metal object in the present invention may include metal parts used in automobile parts, household appliances, general-purpose and the like, and particularly metal pipes known in the art and used as pipings for use in the automobile. The metal pipe may include, for example, a single-rolled steel pipe, double-rolled steel pipe, seamless steel pipe and the like formed from a SPCC steel sheet respectively, ones having a copper layer on the surface of folded surface thereof, electrically welded steel pipe, drawn steel pipe, other metal pipe such as aluminum pipe and the like.

The metal object in the present invention may preferably include ones prepared by forming a galvanized layer on the metal surface, followed by forming a chromate film thereonto, and ones prepared by forming a zinc alloy-plated layer, for example, a zinc-nickel alloy-plated layer, followed by forming a chromate film thereonto from the standpoint of corrosion resistance.

The galvanized layer may be formed by the usual electrical plating method by use of an acid electrolysis bath or an alkali electrolysis bath, and the chromate coating layer may be formed by the known chromic acid chromate treatment, a phosphoric acid chromate treatment, or a coating chromate treatment containing an organic high molecule. The resulting chromate coating film may of hexavalent chrome, trivalent chrome or a mixture of trivalent chrome and hexavalent chrome.

In the present invention, the primer composition (I) is coated onto the surface of the metal object coating substrate to form a primer coating film layer. The primer composition (I) is prepared by adding an inorganic anti-corrosive agent to at least one binder component selected from the group consisting of a binder component (A) containing an epoxy resin and at least one of amino resin and phenol resin, a binder component (B) containing a polyester resin, epoxy resin and phenol resin, and a binder component (C) containing α-olefin·α,β-ethylenically unsaturated carboxylic acid copolymer resin.

The primer composition of the present invention is explained hereinafter.

### [Binder Component]

### Binder Component (A) Containing Epoxy Resin and at least one of Amino Resin and Phenol Resin

A first binder component used in the primer composition (I) of the present invention is the binder component (A) containing the epoxy resin as a base resin and at least one of amino resin and phenol resin as a crosslinking agent.

The epoxy resin is a compound having at least two epoxy groups in one molecule, and may include any known ones without particular limitations, for example, a liquid epoxy resin, solid epoxy resin and the like. In the case where the solid epoxy resin is used, the resin may be dissolved or dispersed into a resin-soluble or dispersible organic solvent.

Specific examples of the epoxy resin may include, for example, epoxy resin (a) containing alicyclic epoxy group such as epoxy group on an alicyclic hydrocarbon ring and an epoxy group directly bonded to a carbon atom forming the alicyclic hydrocarbon ring, an epoxy resin (b) containing an aliphatic epoxy group such as an epoxy group on a straight-chain hydrocarbon other than the above, and an epoxy resin (c) containing aliphatic and alicyclic epoxy group.

The epoxy resin (a) may include, for example, a radical homopolymer of a radically polymerizable monomer containing alicyclic epoxy group (3,4-epoxycyclohexylmethyl (meth)acrylate), a copolymer of the above monomer with other radically polymerizable monomer such as C₁₋₂₄-alkyl or cycloalkyl ester of (meth)acrylic acid, styrene and the like, 3,4-epoxy-cyclohexylmethyl-3,4-epoxycyclohexane carboxylate, bis(2,3-epoxy-cyclopentyl)ether, dicyclopentadiene dioxide, bis(3,4-epoxy-cyclohexylmethyl) of ethylene glycol, 3,4-epoxy-6-methylcyclohexylmethyl-3,4-epoxy-cyclohexane carboxylate, bis(3,4-epoxy-cyclohexylmethyl) adipate, 3,4-epoxy-cyclohexene carboxylic acid ethylene glycol diester, bis(3,4-epoxy-cyclohexyl)acetal, 3,4-epoxy-cyclohexylmethyl-3,4-epoxy-cyclohexylmethyl-e-caprolactone-modified 3,4-epoxy-cyclohexyl carboxylate, 3,4-epoxy-cyclohexylvinyl, 3,4-epoxycyclohexylmethyl (meth)acrylate, 3,4-epoxy-cyclohexylmethyl-ε-caprolactone-modified (meth)acrylate and the like.

The epoxy resin (b) may include, for example, a radical homopolymer of a radically polymerizable monomer containing aliphatic epoxy group such as glycidyl (meth)acrylate, a copolymer of the above monomer with other radically polymerizable monomer, for example, C₁₋₂₄ alkyl or cycloalkyl ester of (meth)acrylic acid, hydroxyl group-containing unsaturated monomers such as hydroxyethyl (meth)acrylate, aromatic compounds such as styrene, nitrile compounds such as (meth)acrylonitrile, and the like; bisphenol type epoxy resin, novolak type epoxy resin, ε-caprolactam-modified bisphenol type epoxy resin, (poly)ethylene glycol diglycidyl ether, (poly)propylene glycol diglycidyl ether, neopentyl glycol diglycidyl ether, trimethylol propane triglycidyl ether and the like.

The epoxy resin (c) may include, for example, a copolymer of an aliphatic epoxy group-containing radically polymerizable monomer, alicyclic epoxy group-containing radically polymerizable monomer, and optionally other radically polymerizable monomer, vinylcyclohexene diepoxide, and the like.

The epoxy resin represented by trade names may include, for example, bisphenol/epichlorohydrin type epoxy resin such as Epikote 1002, 1004, 1007, 1009, 1010 (all marketed by Oil Shell Epoxy Co., Ltd.), Araldite GY-6084, 6097, 6099 (all marketed by Ciba-Geigy Ltd.), DER-662, 664, 667 (all marketed by Dow Chemical Co.), Epototo YD-012PK, YD-014D, YD-909, YD-6020 (all marketed by Tohto Kasei Co., Ltd.) and the like; novolak type epoxy resin such as EPPN-201, 202, EOCN-1020, 102S (all marketed by Nippon Kayaku Co., Ltd.), and the like; Epolead GT300 (trade name, marketed by Daicel Chemical Industries, Ltd., trifunctional alicyclic epoxy resin), Epolead GT400 (trade name, marketed by Daicel Chemical Industries, Ltd., tetrafunctional alicyclic epoxy resin), EHPE (trade name, marketed by Daicel Chemical Industries, Ltd., trifunctional alicyclic epoxy resin), and the like.

The amino resin used as the crosslinking agent of the epoxy resin may include a methyloled amino resin obtained by the reaction of an amino component such as melamine, urea, benzoguanamine, acetoguanamine, steroguanamine, spiroguanamine, dicyandiamide, and the like with aldehyde.

The aldehyde may include, for example, formaldehyde, paraformaldehyde, acetoaldehyde, benzaldehyde and the like. The amino resin may also include ones obtained by etherifying the methyloled amino resin with a suitable alcohol. Examples of the alcohol used in the etherification may include methyl alcohol, ethyl alcohol, n-propyl alcohol, i-propyl alcohol, n-butyl alcohol, i-butyl alcohol, 2-ethylbutanol, 2-ethylhexanol and the like. The amino resin is preferably a methyloled melamine obtained by etherifying at least part of the methylol group.

The phenol resin used as a crosslinking agent of the epoxy resin may include a phenol resin obtained by reacting phenols with formaldehydes.

The phenols used for obtaining the phenol resin may include, for example, phenols having one benzene ring in one molecule such as phenol, methylphenol, p-ethylphenol, p-n-propylphenol, p-isopropylphenol, p-n-butylphenol, p-tert-butylphenol, p-tert-amylphenol, o-cresol, m-cresol, p-cresol, p-cyclohexylphenol, p-octylphenol, p-nonylphenol, 3,5-xylenol, resorcinol, catechol and the like; phenols having two benzene rings in one molecule such as phenyl o-cresol, p-phenyl phenol and the like; bisphenol A, bisphenol F, 1,1-bis(4-hydroxyphenyl) ethane, 2,2-bis(4-hydroxyphenyl)butane, bis(4-hydroxyphenyl)-1,1-isobutane, bis(4-hydroxy-tert-butylphenyl)-2,2-propane, p-(4-hydroxyphenyl)phenol, oxybis(4-hydroxyphenyl), sulfonylbis(4-hydroxyphenyl), 4,4'-dihydroxybenzophenone, bis(2-hydroxynaphthyl)methane and the like. These may be used alone or in combination.

Of these, phenols selected from the group consisting of o-cresol, p-cresol, p-ethylphenol, p-n-propylphenol, p-isopropylphenol, p-tert-butylphenol, p-octylphenol, p-nonylphenol, phenol, m-cresol, 3,5-xylenol, resorcinol, catechol, bisphenol A and bisphenol F are preferable.

The formaldehydes may include formaldehyde, paraformaldehyde, trioxane and the like. These may be used alone or in combination.

The reaction between phenols and formaldehydes may be carried out in a catalyst such as an inorganic acid, organic acid, organic acid metal salt and the like.

The phenol resin may include a resol type phenol resin and a novolak type phenol resin. Of these, the resol type phenol resin is preferable.

The amino resin and phenol resin are used as the crosslinking agents for the epoxy resin, and may be used alone or in combination.

A mixing ratio of the epoxy resin to at least one of amino resin and phenol resin in the binder component (A) is such that the epoxy resin is in the range of 56 to 98% by weight, preferably 60 to 94% by weight, at least one of the amino resin and phenol resin is in the range of 2 to 44% by weight, preferably 6 to 40% by weight based on a total solid content thereof from the standpoints of curing properties, fabrication properties, water resistance, corrosion resistance and the like of the primer coating film layer.

In the present invention, a combined use of the amino resin and phenol resin as the crosslinking agents is preferable. The combined use of the amino resin and phenol resin may improve adhesion properties to the metal object and corrosion resistance.

When combined, respective mixing amounts are preferably such that the epoxy resin is in the range of 56 to 98% by weight, preferably 60 to 94% by weight, more preferably 70 to 90% by weight, the amino resin is in the range of 1 to 22% by weight, preferably 3 to 20% by weight, more preferably 5 to 15% by weight, and the phenol resin is in the range of 1 to 22% by weight, preferably 3 to 20% by weight, more preferably 5 to 15% by weight.

An epoxy resin less than 56% by weight may result poor properties in fabrication properties, water resistance, and corrosion resistance. On the other hand, when more than 98% by weight, curing properties, water resistance and corrosion resistance may be reduced. An amino resin less than 1% by weight may reduce adhesion properties to the substrate. On the other hand, when more than 22% by weight, fabrication properties and water resistance may be poor. A phenol resin less than 1% by weight may reduce adhesion properties to the top layer. On the other hand, when more than 22% by weight, fabrication properties may be poor.

### Binder Component (B) Containing Polyester Resin, Epoxy Resin and Phenol Resin

The binder component (B) containing polyester resin, epoxy resin and phenol resin is a second binder component used in the primer composition (I) of the present invention.

The polyester resin is an esterified product between a polybasic acid component and a polyhydric alcohol component. The polybasic acid component may mainly include at least one dibasic acid selected from, for example, phthalic anhydride, isophthalic acid, terephthalic acid, orthophthalic acid, 2,6-naphthalene dicarboxylic acid, tetrahydrophthalic anhydride, hexahydrophthalic anhydride, hydrogenated dicarboxybisphenol A, hydrogenated dimer acid, hydrogenated naphthalene dicarboxylic acid, 1,4-cyclohexane dicarboxylic acid, 1,2-cyclohexane dicarboxylic acid, tricyclodecane dicarboxylic acid, succinic acid, fumaric acid, adipic acid, sebacic acid, maleic anhydride and the like, and lower alkyl esterified products thereof, and may optionally include a monobasic acid such as benzoic acid, crotonic acid, p-t-butylbenzoic acid and the like, and a trivalent or higher polybasic acid such as trimellitic anhydride, methylcyclohexene tricarboxylic acid, pyromellitic anhydride and the like. The polyhydric alcohol component may include a dihydric alcohol such as ethylene glycol, diethylene glycol, 1,2-propylene glycol, 1,3-propanediol, 1,4-butanediol, neopentyl glycol, 3-methylpentanediol, 1,4-hexanediol, 1,6-hexanediol, 1,4-cyclohexanedimethanol, hydrogenated bisphenol A, an alkylene oxide adduct of bisphenol A and/or bisphenol F, tricyclodecane glycol and the like, and may optionally include trihydric or higher polyhydric alcohol such as glycerin, trimethylolethane, trimethylolpropane, pentaerythritol and the like. These polyhydric alcohols may be used alone or in combination.

The polyester resin is preferably such that the alcohol component consists of 20 to 90 mol% of an ethylene oxide and/or propylene oxide adduct of bisphenol A, 20 to 90 mol% of an ethylene oxide and/or propylene oxide adduct of bisphenol F and 10 to 80 mol% of other alcohol, and that the acid component consists of 70 to 30 mol% of an aromatic dicarboxylic acid and 30 to 70 mol% of an aliphatic carboxylic acid component, from the standpoint of fabrication properties of a resulting coating film. The polyester resin is preferably a straight-chain or low branched chain polyester resin from the standpoint of fabrication properties of a resulting coating film. A mixing amount of the trihydric or higher polyhydric alcohol component, trivalent or higher polybasic acid component or trivalent or higher hydroxy acid component is preferably 5% by weight or less based on a total amount of starting materials, because when more than 5% by weight, fabrication properties of the resulting coating film may be reduced.

The polyester resin may be prepared by a method which comprises mixing the acid component and alcohol component, followed by subjecting to an esterification reaction or ester exchange reaction by a known preparation process, for example, a melt process, solvent process and the like to obtain a saturated polyester resin. Preferably, in the case of obtaining a straight chain polyester resin, a high molecular weight polyester resin may be obtained optionally by carrying out a polycondensation reaction under the conditions of 200 to 300°C, preferably 230 to 280°C, under a vacuum of 1000 Pa or less, preferably 100 Pa or less, in the presence of a catalyst such as antimony trioxide, germanium oxide, N-butyltitanate, dibutyltinoxidotriethyl phosphate and the like.

The polyester resin has a number average molecular weight in the range of 3,000 to 30,000, preferably 10,000 to 30,000. A number average molecular weight less than 3,000 may result poor properties in coating film properties such as fabrication properties. On the other hand, a number average molecular weight more than 30,000 may increase viscosity, resulting in reducing handling properties.

The epoxy resin used in the binder component (B) may include the epoxy resin used in the binder component (A).

The phenol resin used in the binder component (B) may include the phenol resin used in the binder component (A).

A mixing ratio of the polyester resin, epoxy resin and phenol resin in the binder component (B) is such that the polyester is 30 to 98% by weight, preferably 50 to 90% by weight, the epoxy resin is 1 to 50% by weight, preferably 5 to 30% by weight, and the phenol resin is 1 to 50% by weight, preferably 5 to 30% by weight based on a total solid content from the standpoints of curing properties, fabrication properties, water resistance, corrosion resistance and the like of the primer coating film layer. A polyester resin less than 30% by weight may result poor properties in fabrication properties and corrosion resistance. On the other hand, when more than 98% by weight, adhesion properties to the substrate and the top layer may be reduced. An epoxy resin less than 1% by weight may reduce adhesion properties to the substrate. On the other hand, when more than 50% by weight, fabrication properties may be poor. A phenol resin less than 1% by weight may reduce adhesion properties to the top layer. On the other hand, when more than 50% by weight, fabrication properties may be poor.

### Binder Component (C) Containing α-Olefin·α,β-Ethylenically Unsaturated Carboxylic Acid Copolymer Resin

The α-olefin·α,β-ethylenically unsaturated carboxylic acid copolymer resin-containing binder component (C) is a third binder used in the primer composition (I) of the present invention.

The α-olefin·α,β-ethylenically unsaturated carboxylic acid copolymer resin is a copolymer resin between α-olefin and α,β-ethylenically unsaturated carboxylic acid. The α-olefin may include, for example, ethylene, propylene, butylene, isoprene and the like. The α,β-ethylenically unsaturated carboxylic acid may include, for example, acrylic acid, methacrylic acid, maleic acid and the like. An amount of the α,β-ethylenically unsaturated carboxylic acid in the copolymer resin is preferably in the range of 5 to 30% by weight, preferably 5 to 20% by weight based on a total amount of the monomers of the copolymer resin. An α,β-ethylenically unsaturated carboxylic acid less than 5% by weight may result poor adhesion properties to the substrate and top coating. On the other hand, when more than 30% by weight, water resistance may be poor and corrosion resistance may be reduced.

The α-olefin·α,β-ethylenically unsaturated carboxylic acid copolymer resin may particularly include an ethylene·acrylic acid copolymer resin. Specific examples of the ethylene·acrylic acid copolymer resin may include, as trade names, Primacor 5980 (acrylic acid content 20%), Primacor 5981 (acrylic acid content 20%), Primacor 5983 (acrylic acid content 20%), Primacor 5990 (acrylic acid content 20%), and Primacor 5991 (acrylic acid content 20%) (the above are all marketed by Dow Chemical Co.), Escol 5000 (acrylic acid content 6.2%), Escol 5001 (acrylic acid content 6.2%), Escol 5100 (acrylic acid content 11%) and Escol 5110 (acrylic acid content 11%) (the above are all marketed by Exxon Chemical Japan Ltd.), and the like.

The binder component (A), binder component (B) and binder component (C) as the binder components of the primer composition may be used alone or in combination. The binder component (A), binder component (B) and binder component (C) may optionally contain, for example, polyisobutylene, butyl rubber, butadiene rubber, isoprene rubber, ethylene-vinyl acetate copolymer, terpene resin and the like in such a range as not to give adverse effects on performances.

### Inorganic Anti-Corrosive Agent

The inorganic anticorrosive agent used in the primer composition may include, for example, a chrome based pigment such as strontium chromate and the like, and a chrome-free, environmental pollution-free anti-corrosive pigments, preferably environmental pollution-free anti-corrosive pigments from the standpoint of environmental protection. The environmental pollution-free anti-corrosive pigment may include, for example, a condensed phosphate based anti-corrosive pigment such as a zinc phosphate based anti-corrosive pigment, magnesium phosphate based anti-corrosive pigment, aluminum phosphate based anti-corrosive pigment, calcium phosphate based anti-corrosive pigment, zinc phosphite based anti-corrosive pigment, magnesium phosphite based anti-corrosive pigment, calcium phosphite based anti-corrosive pigment, aluminum phosphite based anti-corrosive pigment and the like, a pigment prepared by treating the surface of the condensed phosphate based anti-corrosive pigment with a metal compound; a zinc based anti-corrosive pigment such as zinc molybdate based anti-corrosive pigment, zinc cyanamide based anti-corrosive pigment, zinc calcium cyanamide based anti-corrosive pigment, silica and the like. These may be used alone or in combination.

The condensed phosphate used in the pigment prepared by treating the surface of the condensed phosphate based anti-corrosive pigment with the metal compound may include aluminum condensed phosphate, particularly aluminum tripolyphosphate, and the metal compound may include magnesium silicate, particularly magnesium hexasilicate.

The silica may particularly include an amorphous silica, preferably an amorphous silica having a mean particle size of 1 to 10 µm, and a pore volume of 0.05 to 2.0 ml/g.

In the present invention, the inorganic anti-corrosive agent is preferably at least one pigment selected from the group consisting of a pigment prepared by treating the surface of aluminum dihydrogen tripolyphosphate with magnesium hexasilicate, magnesium phosphate based anti-corrosive pigment and an amorphous silica.

A mixing ratio of the inorganic anti-corrosive agent is 3 to 200 parts by weight, preferably 3 to 100 parts by weight, more preferably 5 to 50 parts by weight per 100 parts by weight of a total resin solid content in the composition. An anti-corrosive pigment less than 3 parts by weight may result poor corrosion resistance. On the other hand, when more than 200 parts by weight, physical performances of a resulting coating film may be poor.

In the primer composition, the binder component may be dissolved or dispersed into an organic solvent. The organic solvent may include, for example, a hydrocarbon solvent such as hexane, butane, isooctane, unsaturated aliphatic hydrocarbon, benzene, toluene, o-, m-, p-xylene, cyclohexane and the like; an ether solvent such as dioxane, tetrahydrofuran, cellosolve, methylcellosolve, butylcellosolve, methylcarbitol, 2-methoxyethanol, 2-butoxyethanol, diethylene glycol, diethylene glycol monoethyl ether, diethylene glycol monobutyl ether, diethylene glycol monoethyl ether acetate, triethylene glycol monomethyl ether, 1-methoxy-2-propanol, 1-ethoxy-2-propanol, dipropylene glycol monomethyl ether and the like; a ketone solvent such as acetone, methyl ethyl ketone, isophorone, dicyclohexanone and the like; an ester solvent such as methyl acetate, ethyl acetate, propyl acetate, butyl acetate, isobutyl acetate, pentyl acetate, 2-methoxybutyl acetate, 2-ethylhexyl acetate, benzyl acetate, cyclohexyl acetate, ethylene glycol monoacetate, cellosolve acetate, carbitol acetate, ethyl acetoacetate and the like; other solvents such as pyridine, formamide, N,N-dimethylformamide, acetoamide and the like.

The primer composition (I) has a solid content in the range of 10 to 80% by weight, preferably 20 to 60% by weight.

The primer composition (I) may optionally contain pigments other than the above, colorants, fiffers, flow controlling agents, polymer fine particles, other resins and crosslinking agents, and the like.

Coating of the primer composition (I) may be carried out any known coating methods depending on a shape of the metal object so as to be a dry film thickness in the range of 2 to 20 µm, preferably 2 to 15 µm.

In the method of the present invention, the formation of the primer coating film layer is followed by coating a topcoat coating composition consisting of a thermoplastic resin based coating composition (II) onto the primer coating film layer to form a topcoat coating film layer consisting of a thermoplastic resin coating film layer. The thermoplastic resin based coating composition (II) may preferably include a vinyl fluoride resin based coating composition, vinylidene fluoride resin based coating composition, a polyamide resin based coating composition and the like.

Formation of the topcoat coating film layer consisting of the thermoplastic resin coating film layer may be carried out by any known methods depending on a shape of the metal object. For example, in the case of the polyamide resin based coating composition, coating onto a metal pipe may be carried out by a method which comprises forming a primer coating film layer, followed by preheating the metal pipe, and subjecting to an extrusion molding method. A resulting film thickness is in the range of 20 to 180 µm.

### Preferred Embodiments of the Invention:

The present invention is explained more in detail by the following Examples, in which "part" and "%" represent "part by weight" and "% by weight" respectively.

### [Example ① of Primer Composition Containing Binder Component (A) Containing Epoxy Resin and at least one of Amino Resin and Phenol Resin]

### Preparation of Epoxy Resin (EP-1) Solution

35 parts of Epikote 1010 (trade name, marketed by Oil Shell Epoxy Co., Ltd., bisphenol/epichlorohydrin type epoxy resin) was dissolved in 65 parts of diethylene glycol monoethyl ether acetate to obtain an epoxy resin (EP-1) solution having a solid content of 35%.

### Preparation of Inorganic Anti-Corrosive Agent-Dispersed Paste

A double wall stainless mixer was charged with 100 parts of the epoxy resin (EP-1) solution and 100 parts of an inorganic anti-corrosive agent as shown in Table 1, followed by stirring at a low speed for mixing, and dispersing in a beed mill dispersion mixer for 40 minutes to obtain a dispersed paste shown in Table 1.

### Example 1

To 60 parts of a paste prepared by use of the inorganic anti-corrosive agent (AP-1) (Note 3) were added 227 parts of the epoxy resin (EP-1) solution and 16.7 parts of Backamine P196M (Note 1) as a crosslinking agent, followed by mixing to obtain a primer composition.

### Examples 2-6, and Comparative Examples 1-4

Example 1 was duplicated except that respective formulations as shown in Table 1 were used to obtain respective primer compositions.

### Coating

Respective primer compositions obtained in Examples and Comparative Examples were coated onto a galvanized steel sheet (Zinkote, trade name, marketed by Nippon Steel Corporation) by a bar coater so as to be a dry film thickness of 5 µm, followed by heat curing at 200°C for 5 minutes to form respective primer coating films, coating thereonto Fucaron No. 3000 (Note 7) or Fucaron No. 4000 (Note 8) as a topcoat coating composition so as to be a cured coating film thickness of 30 µm, heat curing at 230°C for 3 minutes to obtain a test coating panel, and subjecting the test coating panel to the following tests. Test results are shown in Table 1.

In Comparative Example 5, Fucaron No. 3000 (the above trade name) as a topcoat coating composition was coated onto the galvanized steel sheet (Zinkote, trade name, marketed by Nippon Steel Corporation) in the same coating conditions as above without coating the primer composition, followed by heat curing to obtain a test coating panel. Results are shown in Table 1.

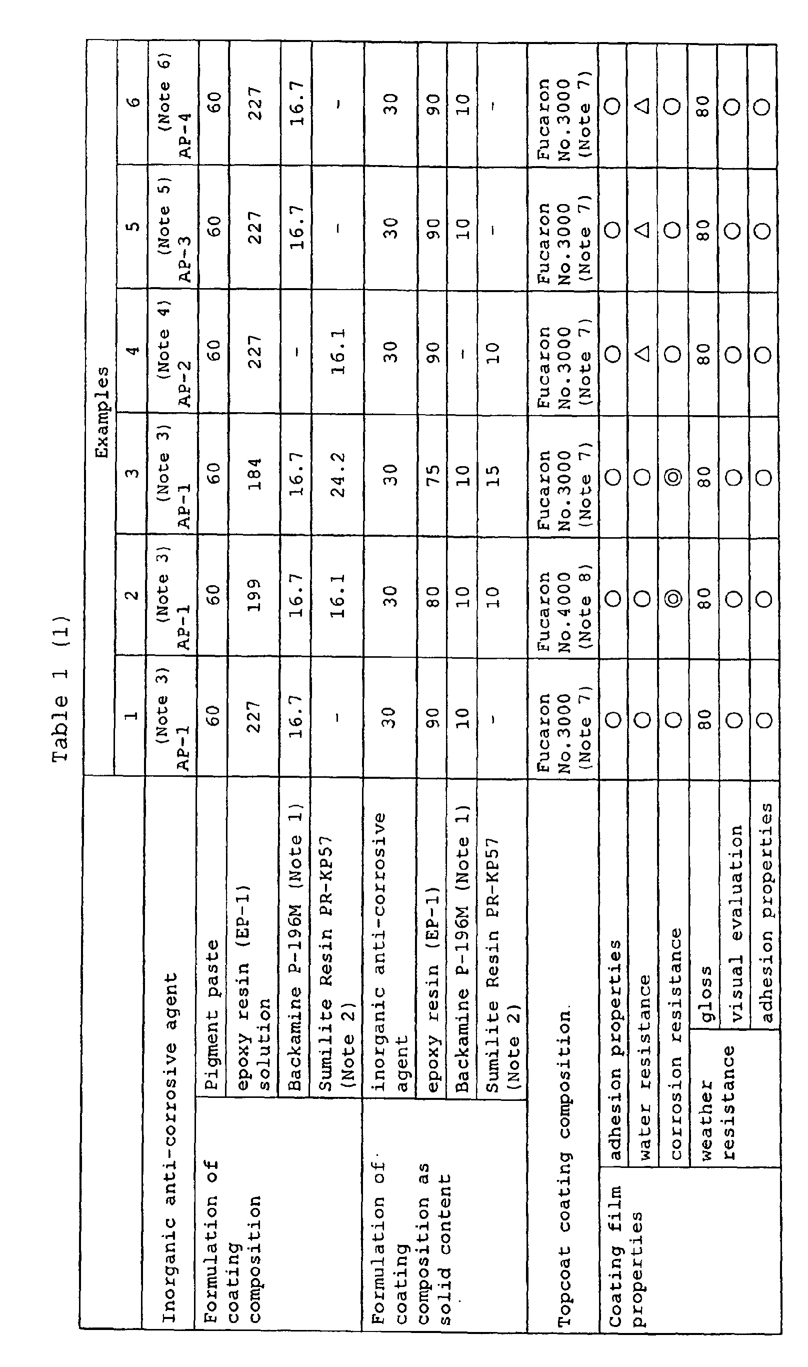

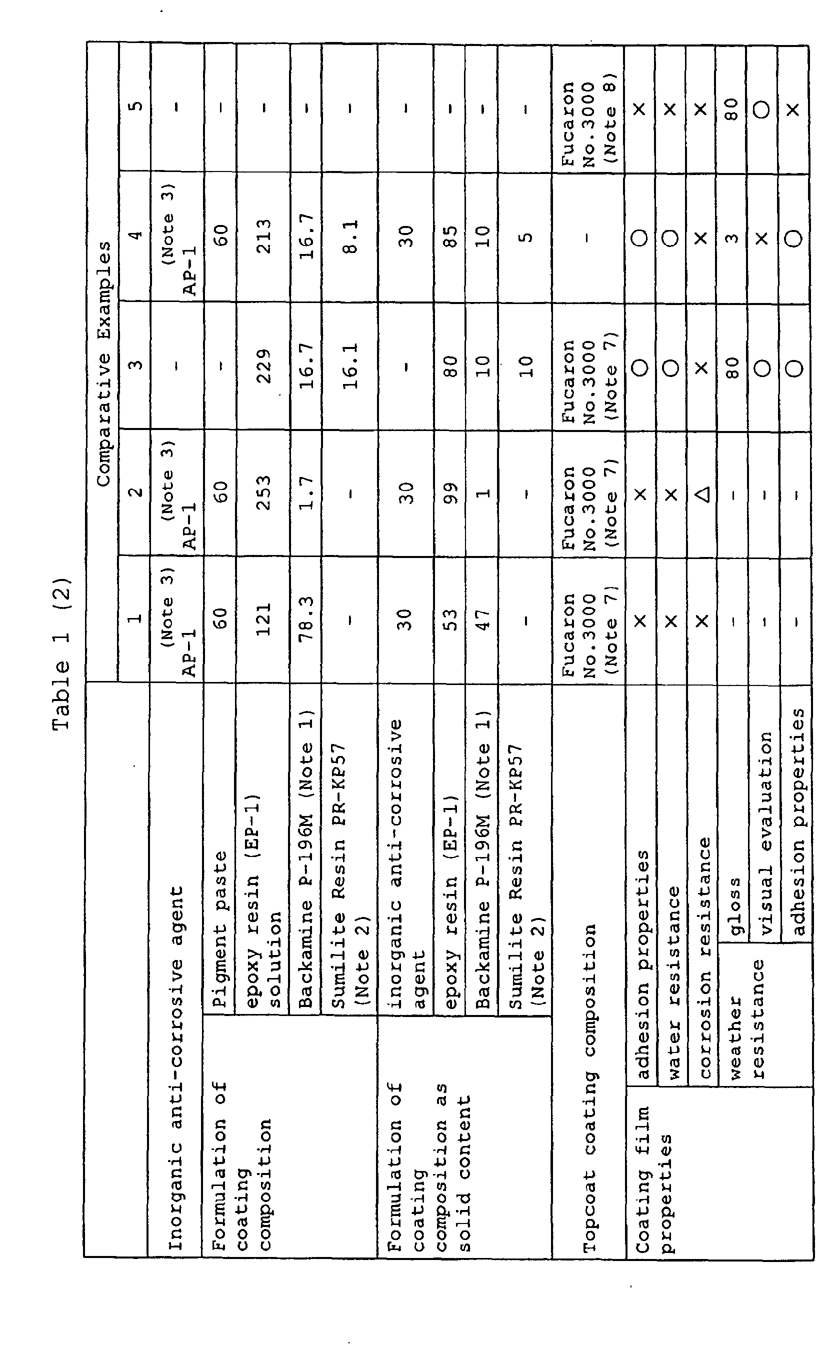

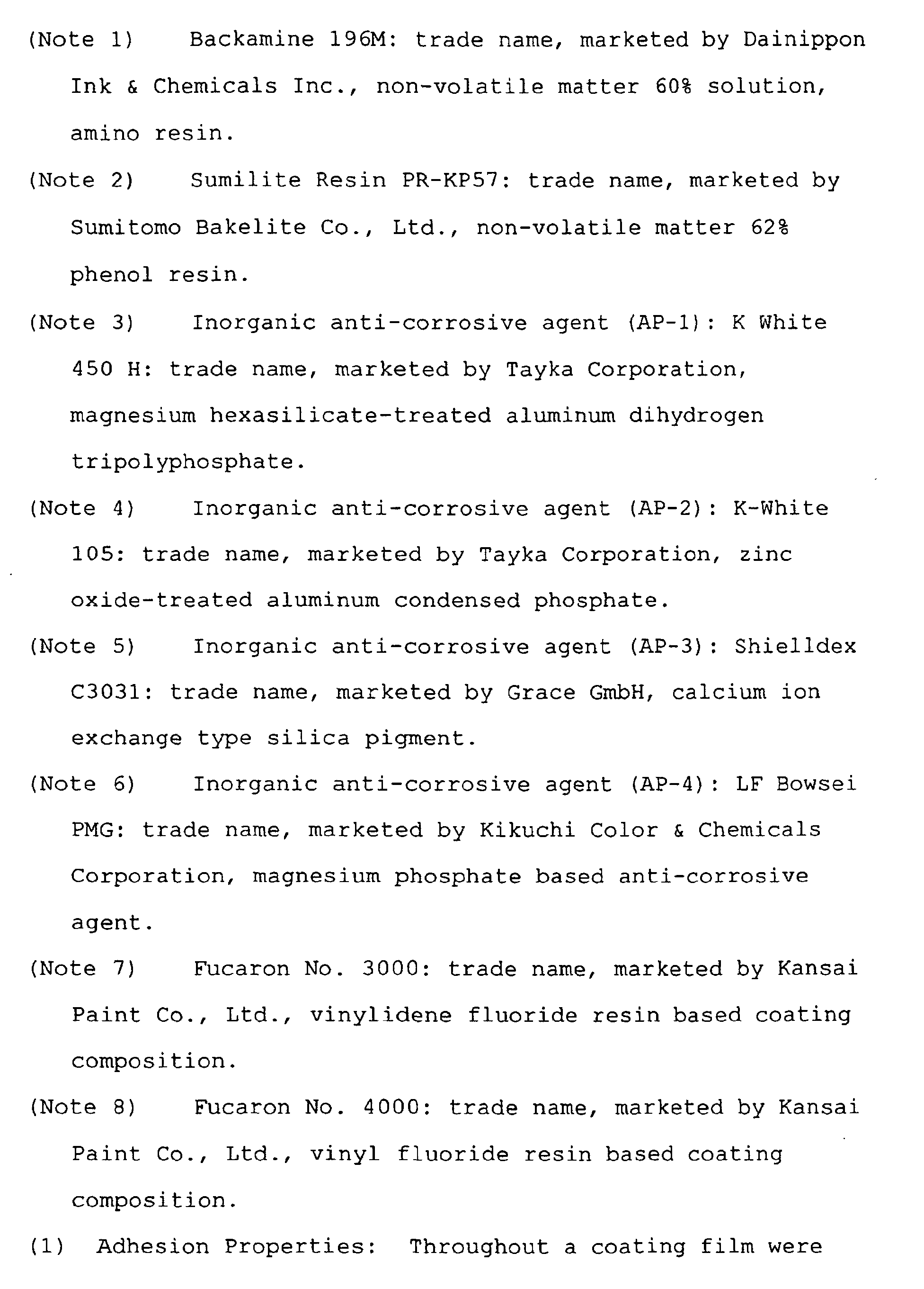

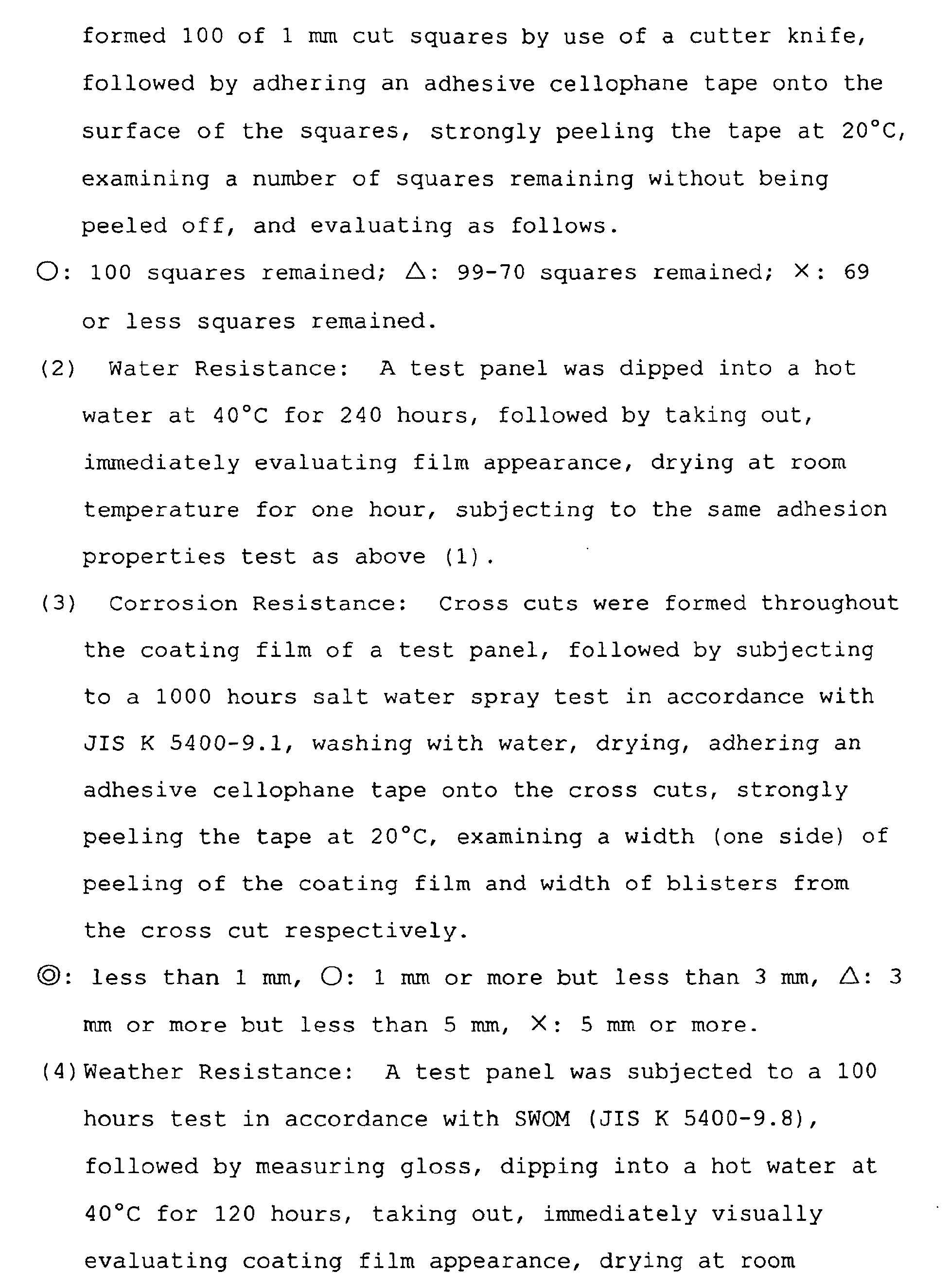

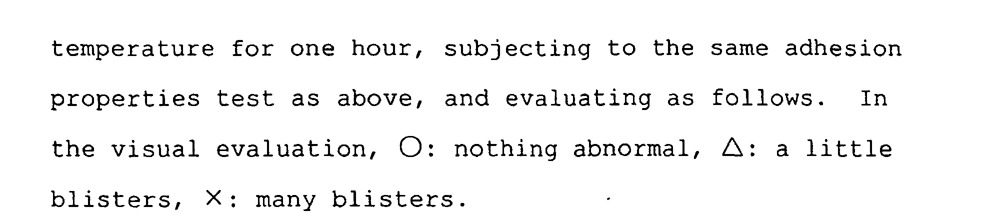

### [Example ② of Primer Composition Containing Binder Component (A) Containing Epoxy Resin and at least one of Amino Resin and Phenol Resin]

### Synthesis of Phenol Resin

### Synthesis Example 1

A reactor equipped with a stirrer, heating device, reflux condenser and thermometer was charged with 150 parts of phenol, 850 parts of p-cresol and 580 parts of 80% formaldehyde, followed by adding manganese acetate to control a pH of reaction at 6.2, slowly raising temperature up to 110°C, reacting for 5 hours under reflux and under normal pressure, carrying out dehydration reaction under a vacuum of 47 to 80 Pa, completing the dehydration reaction at the time when the temperature reached 120°C under a vacuum of 53 Pa to obtain phenol resin (PH-1), and preparing a 60% solid content phenol resin (PH-1) solution with xylene.

### Examples 7-14 and Comparative Examples 6-7

The epoxy resin solution, phenol resin solution and inorganic anti-corrosive agents were mixed according to the formulation shown in Table 2, followed by dispersing to obtain respective primer compositions. In Table 2, the formulation is represented by solid content.

**Table 2 (1)**

| | Examples | | | | |
|---|---|---|---|---|---|
| | 7 | 8 | 9 | 10 | 11 |
| Epoxy resin (EP-1) | 80 | 90 | 85 | 70 | 80 |
| Backamine P-196M (Note 1) | 10 | 10 | - | 15 | 10 |
| Phenol resin (PH-1) | 10 | - | 15 | 15 | 10 |
| Inorganic anti-corrosive agent (AP-1) (Note 3) | 30 | 25 | - | - | - |
| Inorganic anti-corrosive agent (AP-5) (Note 9) | - | - | 20 | - | 15 |
| Inorganic anti-corrosive agent (AP-6) (Note 10) | - | - | - | 30 | 15 |
| Inorganic anti-corrosive agent (AP-7) (Note 11) | - | - | - | - | - |
| Inorganic anti-corrosive agent (AP-8) (Note 12) | - | - | - | - | - |
| Inorganic anti-corrosive agent (AP-9) (Note 13) | - | - | - | - | - |

**Table 2 (2)**

| | Examples | | | Comparative Examples | |
|---|---|---|---|---|---|
| | 12 | 13 | 14 | 6 | 7 |
| Epoxy resin (EP-1) | 80 | 80 | 80 | 50 | 80 |
| Backamine P-196M (Note 1) | 10 | 10 | 10 | 25 | 10 |
| Phenol resin (PH-1) | 10 | 10 | 10 | 25 | 10 |
| Inorganic anti-corrosive agent (AP-1) (Note 3) | - | - | - | 30 | - |
| Inorganic anti-corrosive agent (AP-5) (Note 9) | - | - | - | - | - |
| Inorganic anti-corrosive agent (AP-6) (Note 10) | - | - | - | - | - |
| Inorganic anti-corrosive agent (AP-7) (Note 11) | 30 | - | - | - | - |
| Inorganic anti-corrosive agent (AP-8) (Note 12) | - | 30 | - | - | - |
| Inorganic anti-corrosive agent (AP-9) (Note 13) | - | - | 30 | - | - |
| (Note 9) Inorganic anti-corrosive agent (AP-5): CRF-15 (trade name, marketed by Kikuchi Color & Chemicals Corporation, magnesium phosphate based pigment). | | | | | |
| (Note 10) Inorganic anti-corrosive agent (AP-6): amorphous silica, mean particle size 4.3 µm, pore volume 0.4 ml. | | | | | |
| (Note 11) Inorganic anti-corrosive agent (AP-7): K White 140 W (trade name, marketed by Tayka Corporation, zinc oxide-treated aluminum dihydrogen tripolyphosphate). | | | | | |
| (Note 12) Inorganic anti-corrosive agent (AP-8): LF Bowsei MC-400WZ (trade name, marketed by Kikuchi Color & Chemicals Corporation, zinc calcium molybdate based anti-corrosive agent). | | | | | |
| (Note 13) Inorganic anti-corrosive agent (AP-9): LF Bowsei ZP-50S (trade name, marketed by Kikuchi Color & Chemicals Corporation, zinc phosphate based anti-corrosive agent). | | | | | |

### Coating

### Example 15

The primer composition obtained in Example 7 was coated onto a steel sheet (Zinkote EG-C, trade name, marketed by Nippon Steel Corporation) prepared by applying a chromate treatment onto the surface of a galvanized steel sheet having a zinc-plated amount of 20 g/m² (one side) by a bar coater so as to be a dry film thickness of 5 µm, followed by heat curing at 230°C for one minute to form a primer coating film layer, coating thereonto Fucaron No. 3000 (Note 7) so as to be a cured coating film thickness of 30 µm, and heat curing at 230°C for 3 minutes to obtain a test coating panel.

### Examples 16-23 and Comparative Examples 8-9

Example 15 was duplicated except that combinations of primer compositions and topcoat coating compositions as shown in Table 3 were used respectively to obtain respective test coating panels. In the case where the topcoat coating composition is polyamide resin based coating composition, Orgasol 2002 D (Note 14) was used as the topcoat coating composition was dispersed into propyl alcohol so as to be a non-volatile matter content of 50%, followed by coating so as to be a cured coating film thickness of 150 µm, and heat curing at 230°C for 3 minutes to obtain respective test coating panels.

In Comparative Example 10, Fucaron No. 4000 (Note 8) was coated directly onto Zinkote EG-C (the above trade name) under the same coating conditions as above without coating a primer composition, followed by heat curing to obtain a test coating panel.

Respective test coating panels obtained as above were subjected to the following tests. Test results are shown in Table 3.

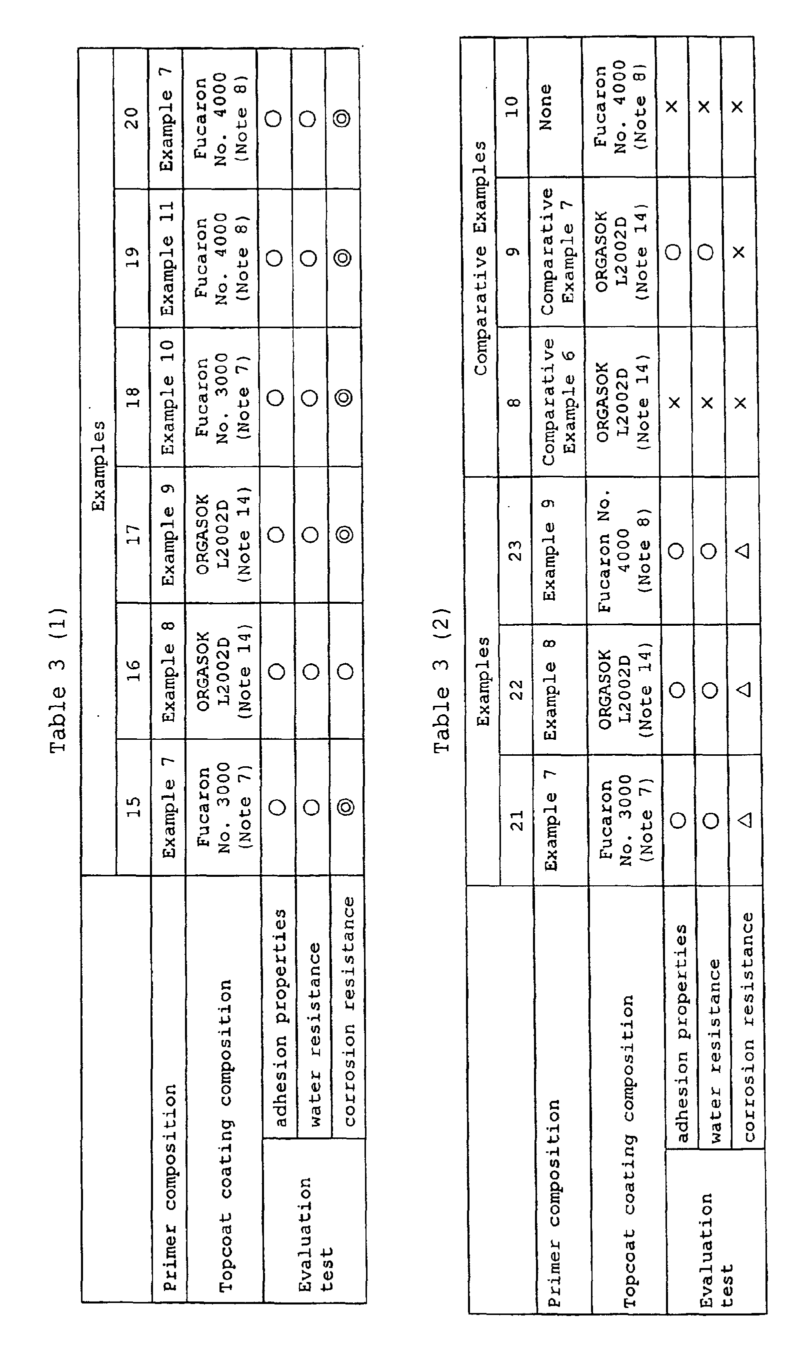

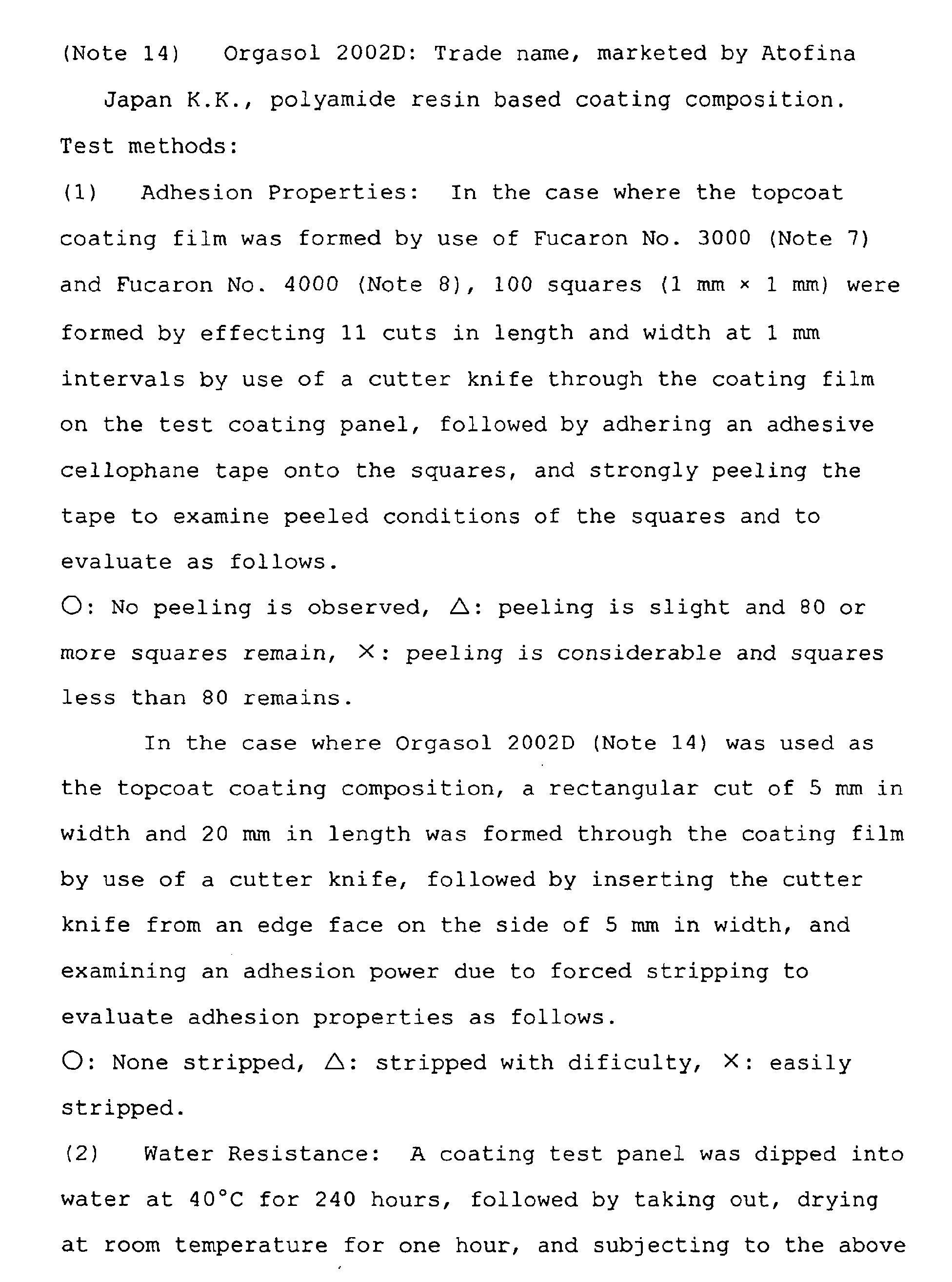

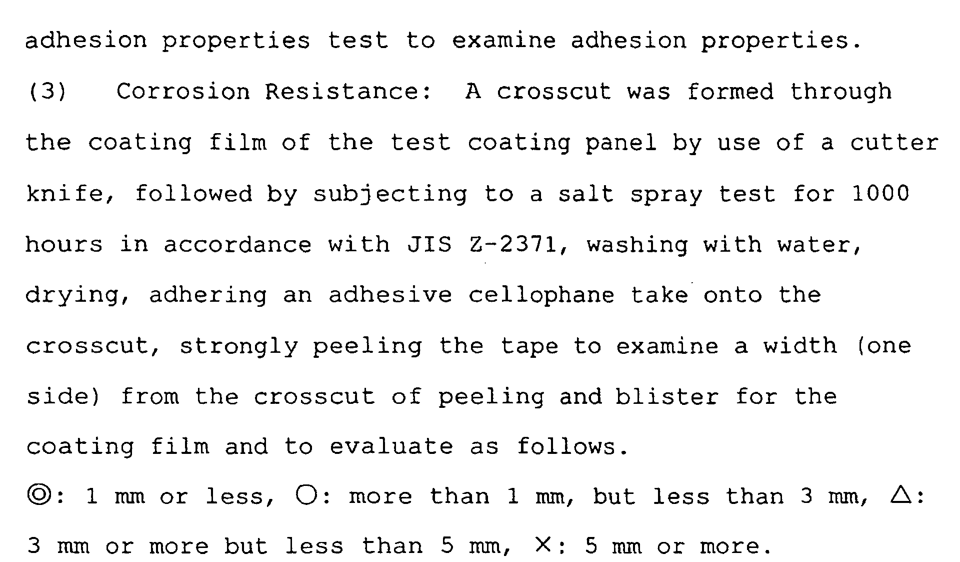

### [Preparation Example of Primer Composition Containing Binder Component (B) Containing Polyester Resin, Epoxy Resin and Phenol Resin]

### Synthesis of Polyester Resin

### Synthesis Example 2

A reactor equipped with a stirrer, heating device, reflux condenser and thermometer was charged with 199 g (1.2 moles) of isophthalic acid, 100 g (0.6 mole) of terephthalic acid, 175 g (1.2 moles) of adipic acid, 74 g (1.2 moles) of ethylene glycol, 491 g (1.5 moles) of Newpol BPE-20 (trade name, marketed by Sanyo Chemical Industries, Ltd., ethylene oxide adduct of bisphenol A, average degree of addition 2.2, hydroxyl value 343), and 0.1 g of dibutyltindioxide, followed by subjecting to esterification reaction at 250°C in the presence of an inert gas, removing a produced water, proceeding the reaction to an acid value of 1.0, adding 0.2 g of antimony trioxide and 0.4 g of triethyl phosphate, performing a polycondensation reaction at 280°C under a vacuum of 100 Pa to obtain a polyester resin (PE-1) having a number average molecular weight of 22,000. The polyester resin (PE-1) was dissolved in a mixed solvent of Solvesso 150 (trade name, marketed by Esso Standard Oil Co., Ltd.)/cyclohexanone = 50/50 (weight ratio) to prepare a resin solution having a heating residue of 40%.

### Synthesis Example 3

The same reactor as used in Synthesis Example 2 was charged with 199 g (1.2 moles) of isophthalic acid, 100 g (0.6 mole) of terephthalic acid, 175 g (1.2 moles) of adipic acid, 74 g (1.2 moles) of ethylene glycol, 449 g (1.5 moles) of Newpol BPE-20 (trade name, marketed by Sanyo Chemical Industries, Ltd., ethylene oxide adduct of bisphenol A, average degree of addition 2.2, hydroxyl value 343), and 0.1 g of dibutyltindioxide, followed by subjecting to esterification reaction at 250°C in the presence of an inert gas, removing a produced water, proceeding the reaction to an acid value of 1.0, adding 0.2 g of antimony trioxide and 0.4 g of triethyl phosphate, performing a polycondensation reaction at 280°C under a vacuum of 100 Pa to obtain a polyester resin (PE-2) having a number average molecular weight of 22,000. The polyester resin (PE-2) was dissolved in a mixed solvent of Solvesso 150 (trade name, marketed by Esso Standard Oil Co., Ltd.)/cyclohexanone = 50/50 (weight ratio) to prepare a resin solution having a heating residue of 40%.

### Synthesis of Phenol Resin

### Synthesis Example 4

The same reactor as in Synthesis Example 2 was charged with 1000 parts of paracresol, 400 parts of 80% paraformaldehyde, 550 parts of 37% formalin and 300 parts of cellosolve acetate, followed by adding lead acetate to control pH of the reaction system at 5.1, slowly raising the temperature up to 110°C, reacting for 5 hours in a reflux state, and under normal pressure, subjecting to a dehydration reaction under normal pressure, completing the dehydration reaction when the temperature reached 120°C to obtain a phenol resin (PH-2), which was dissolved in xylene to prepare a resin solution having a heating residue to 60%.

### Examples 24-34 and Comparative Examples 9-14

According to the formulations as shown in Table 4, polyester resins (PE-1) and (PE-2), phenol resins (PH-1) and (PH-2), epoxy resins (EP-1) and (EP-2), and inorganic anti-corrosive agents were mixed and dispersed to obtain respective primer compositions. In Table 4, mixed amounts are represented by solid content.

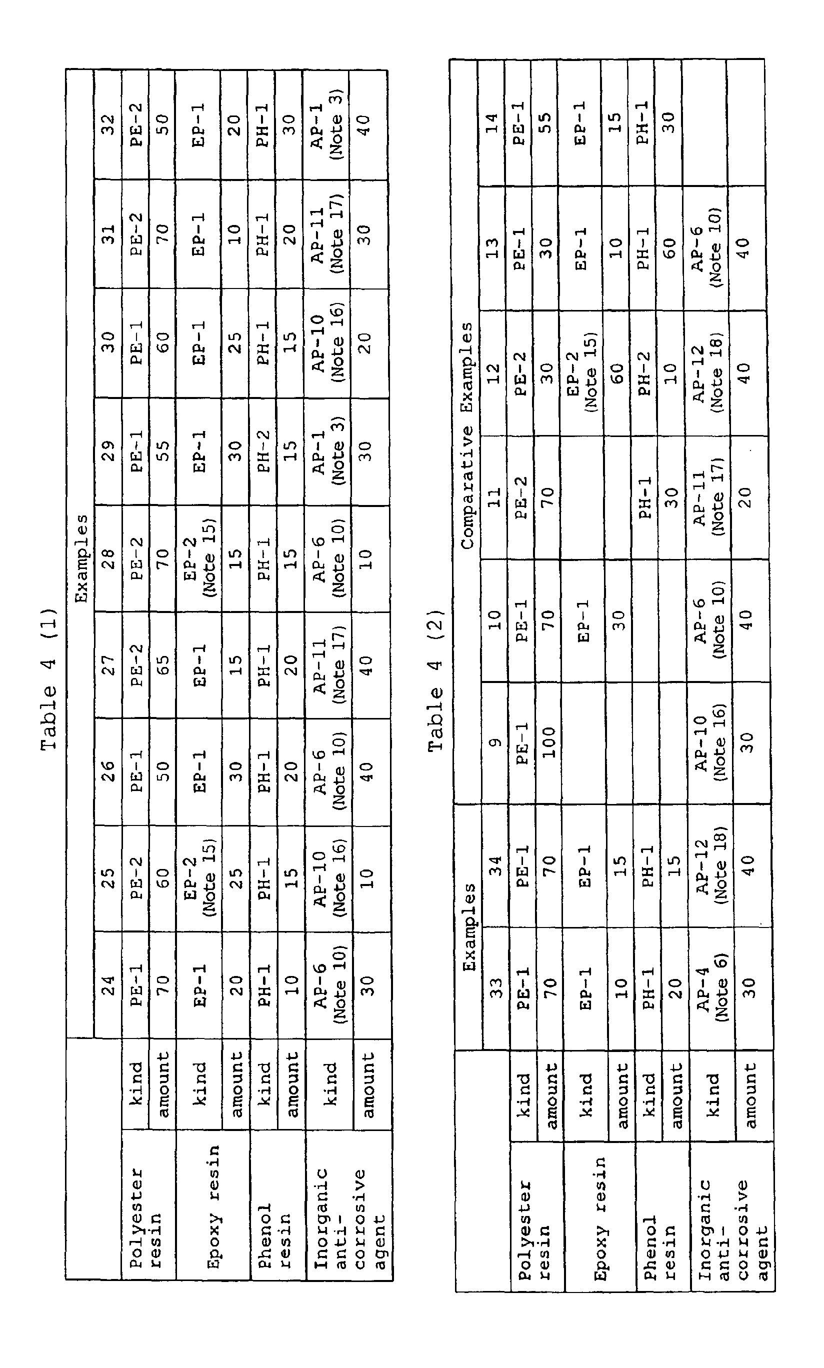

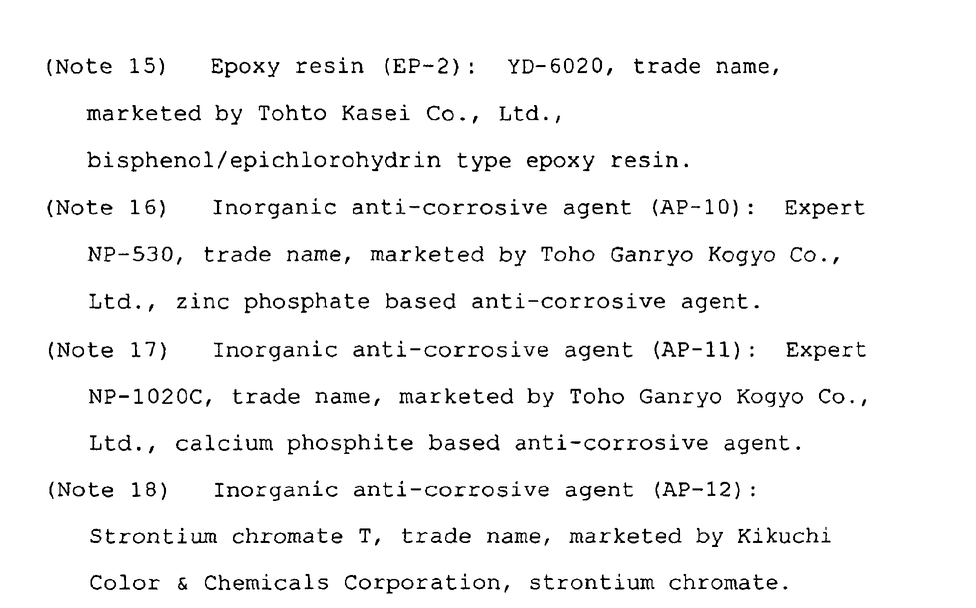

### Coating

### Examples 35-45 and Comparative Examples 15-21

With the combinations of primer compositions and topcoat coating compositions shown in Table 5, respective test coating panels were obtained by the same method is described Examples 15-23 and Comparative Examples 8-10.

### Example 46

A nickel-zinc alloy-galvanized steel sheet having a plated amount of 40 g/m² (one side) was subjected a chromate treatment so that a coating weight of a coating chromate solution may be in the range of 10 to 200 mg/m², followed by forming a primer coating film layer, and forming a topcoat coating film layer to obtain respective test coating panels as shown in Table 5.

The coating test panels were subjected the following tests. Results are shown in Table 5.

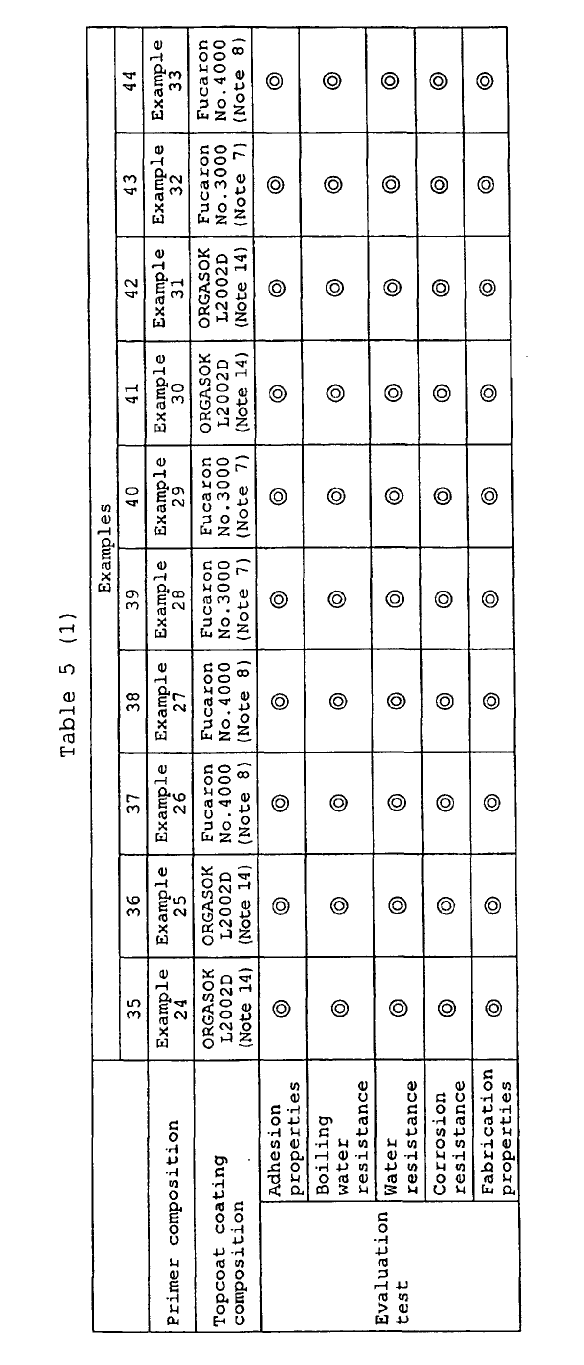

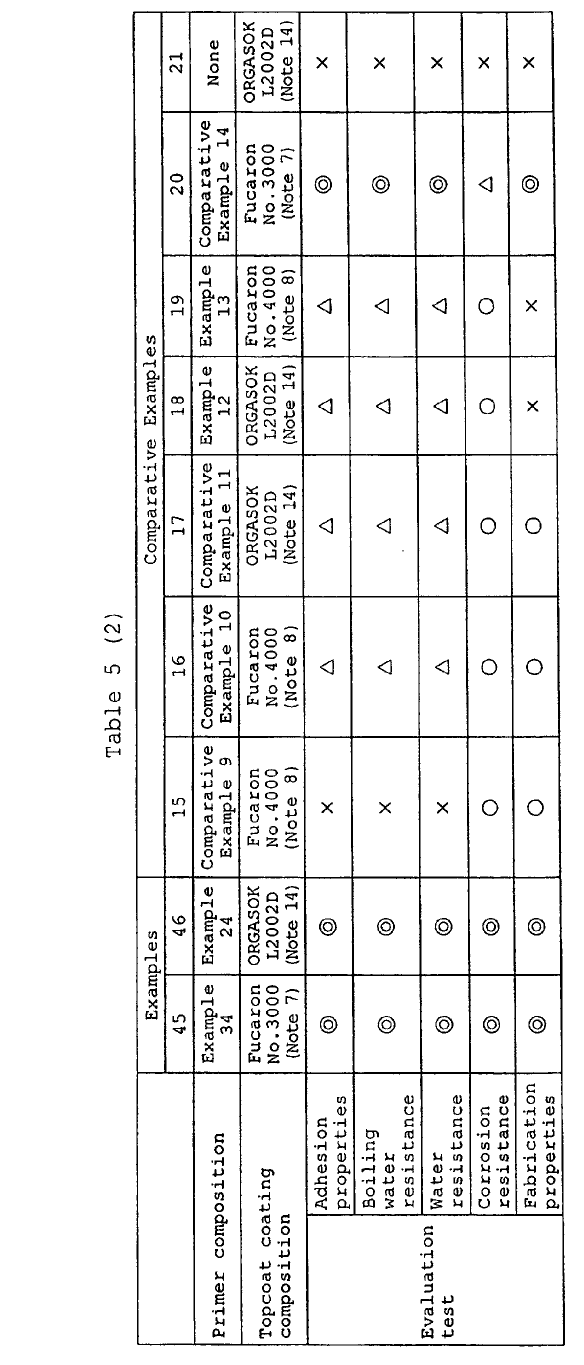

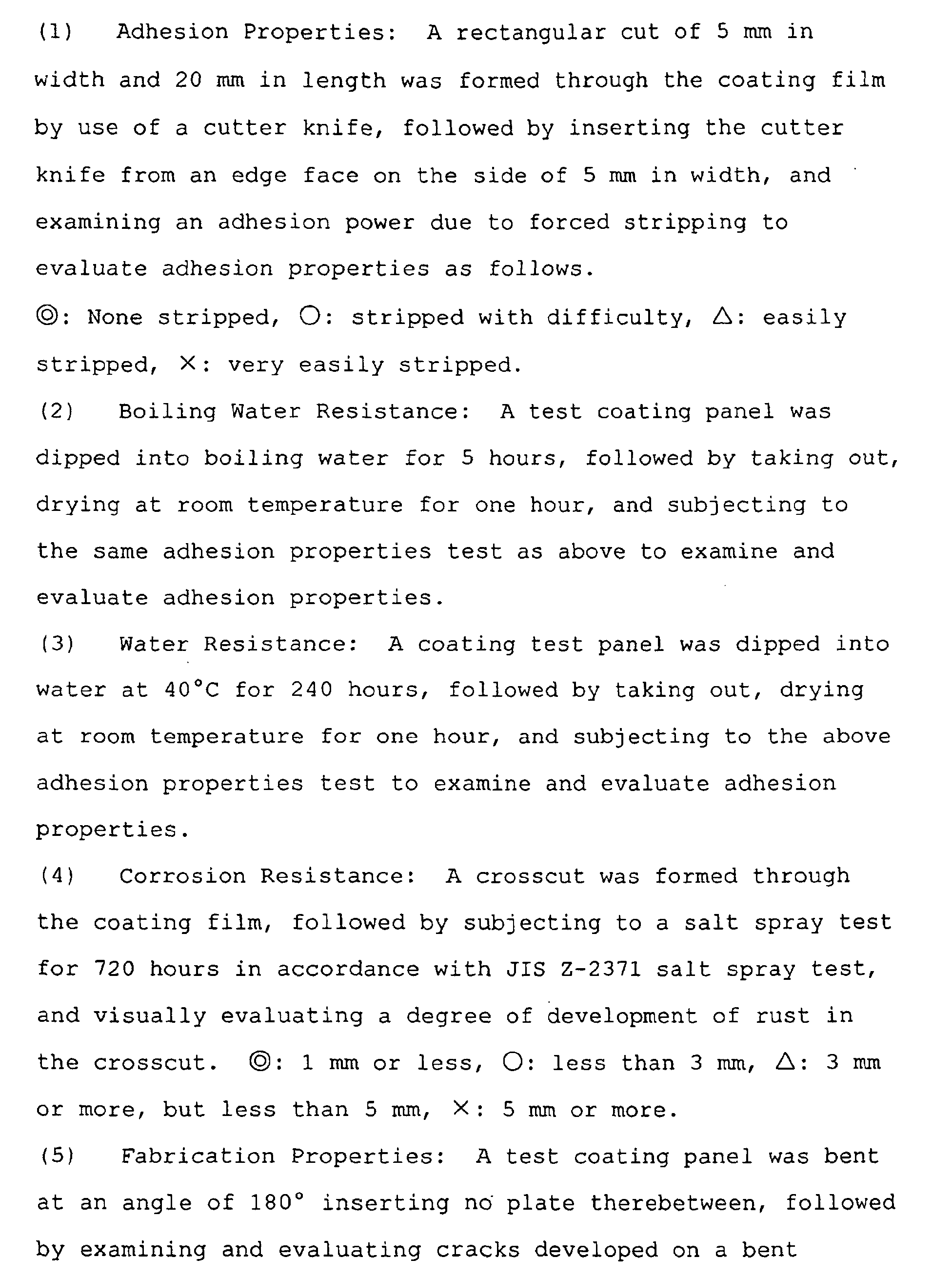

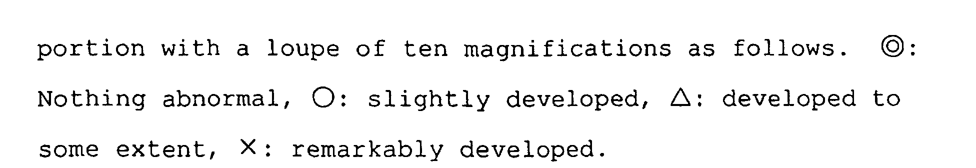

### [Example of primer composition containing binder component (C) containing α-olefin·α,β-ethylenically unsaturated carboxylic acid copolymer resin]

### Examples 47-50 and Comparative Examples 23-24

Respective ethylene·acrylic acid copolymer resin solutions controlled so as to be a resin solid content of 20% with a mixed solvent of xylene/butanol = 9/1 (weight ratio) and respective inorganic anti-corrosive agents were mixed according to the formulations shown in Table 6, followed by dispersing to obtain respective primer compositions. In Table 6, mixed amounts are represented by solid content.

**Table 6 (1)**

| Component | | Examples | | | |
|---|---|---|---|---|---|
| | | 47 | 48 | 49 | 50 |
| Ethylene·acrylic acid copolymer resin | kind | (Note 19) EAA-1 | (Note 20) EAA-2 | (Note 21) EAA-3 | (Note 22) EAA-4 |
| | amount | 100 | 100 | 100 | 100 |
| Inorganic anti-corrosive agent | kind | (Note 3) AP-1 | (Note 6) AP-4 | (Note 16) AP-10 | (Note 10) AP-6 |
| | amount | 10 | 30 | 50 | 100 |

**Table 6 (2)**

| Component | | Comparative Examples | |
|---|---|---|---|
| | | 23 | 24 |
| Ethylene-acrylic acid copolymer resin | kind | (Note 19) EAA-1 | (Note 20) EAA-2 |
| | amount | 100 | 100 |
| Inorganic anti-corrosive agent | kind | (Note 3) AP-1 | (Note 3) AP-1 |
| | amount | 1 | 250 |
| (Note 20) EAA-1: Primacor 5980, trade name, marketed by Dow Chemical Co., acrylic acid content 20%, ethylene·acrylic acid copolymer resin solution. | | | |
| (Note 21) EAA-2: Primacor 5990, trade name, marketed by Dow Chemical Co., acrylic acid content 20%, ethylene·acrylic acid copolymer resin solution. | | | |
| (Note 22) EAA-3: Escol 5000, trade name, marketed by Exxon Chemical Japan Ltd., acrylic acid content 6.2%, ethylene·acrylic acid copolymer resin solution. | | | |
| (Note 23) EAA-4: Escol 5100, trade name, marketed by Exxon Chemical Japan Ltd., acrylic acid content 11%, ethylene·acrylic acid copolymer resin solution. | | | |

### Examples 51-56 and Comparative Examples 24-25

With combinations of primer compositions and topcoat coating compositions as shown in Table 7, respective test coating panels were obtained in the same manners as in Examples 15-23 and Comparative Examples 8-10.

### Comparative Example 26

For example, Example 51 was duplicated no primer composition was used to obtain a test coating panel.

### Example 57

A nickel-zinc-ally-galvanized steel sheet having a plated amount of 40 g/m² (one side) was subjected to a chromate treatment so that a coating weight of a coating chromate solution may be in the range of 10 to 200 mg/m², followed by forming a primer coating film layer, and forming a topcoat coating film layer to obtain respective test coating panels as shown in Table 7.

### Example 58

With the combination as shown in Table 7, a primer coating film layer was formed onto an aluminum plate in accordance with JIS A 1050 as a metal substrate, followed by forming a topcoat coating film layer to obtain a test coating panel.

Above test coating panels were subjected to evaluation tests in the same manner as in Examples 35-46 and Comparative Examples 15-21. Results are shown in Table 7.

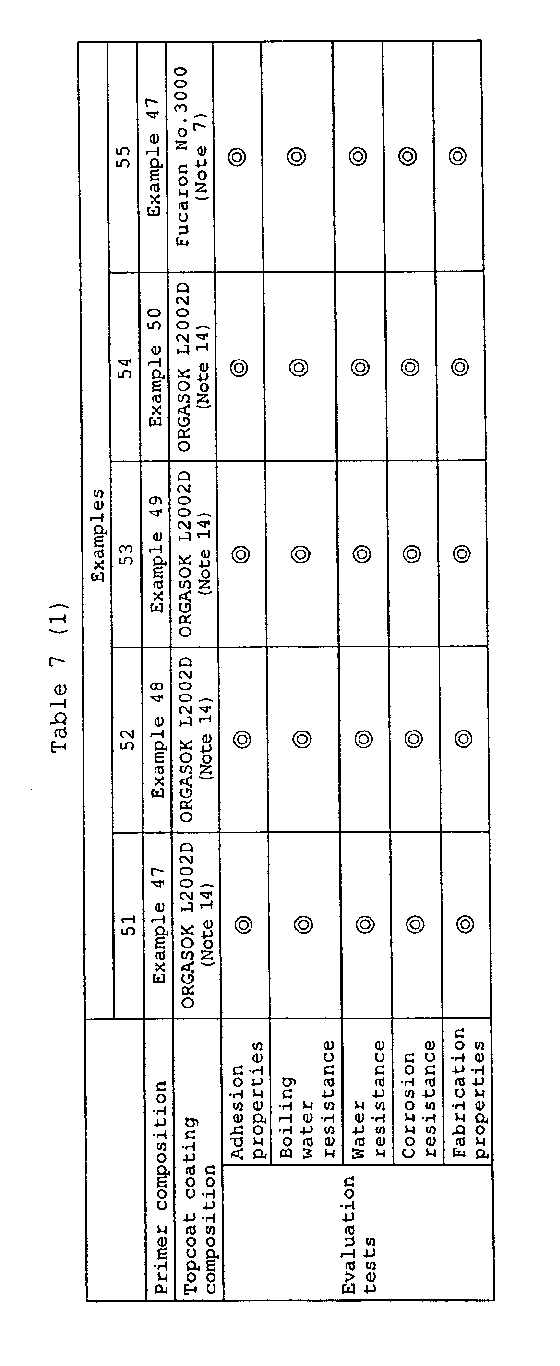

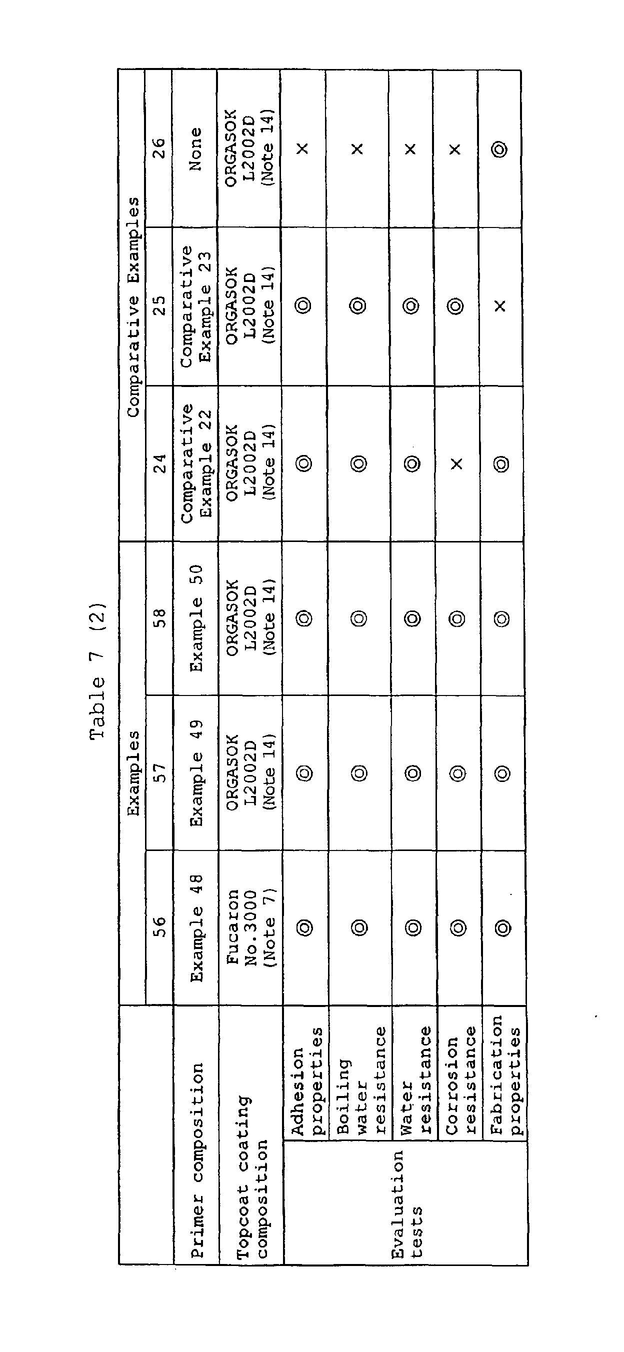

### Industrial Applicability:

The present invention can provide a metal object-coating method capable of forming a protective coating film showing good properties in heat resistance, corrosion resistance and impact resistance, along with improved adhesion properties of the thermoplastic resin coating film and good adhesion properties thereof to impact.

The metal object-coating method of the present is suitably applicable to metal pipings for use in the automobile.

## Claims

1. A metal object-coating method, which method comprises coating a primer composition (I) prepared by adding an inorganic anti-corrosive agent to at least one binder component selected from the group consisting of a binder component (A) containing an epoxy resin and at least one of amino resin and phenol resin, a binder component (B) containing a polyester resin, epoxy resin and phenol resin, and a binder component (C) containing α-olefin·α,β-ethylenically unsaturated carboxylic acid copolymer resin onto the surface of a metal object coating substrate to form a primer coating film layer, followed by coating a topcoat coating composition consisting of a thermoplastic resin based coating composition (II) onto the primer coating film layer to form a topcoat coating film layer consisting of a thermoplastic resin coating film layer.

2. A metal object-coating method as claimed in claim 1, wherein the thermoplastic resin-based coating composition (II) is a vinyl fluoride resin based coating composition, a vinylidene fluoride resin based coating composition or a polyamide resin based coating composition.

3. A metal object-coating method as claimed in claim 1 or 2, wherein the binder component (A) is such that the epoxy resin is in the range of 56 to 98% by weight, at least one of the amino resin and phenol resin is in the range of 2 to 44% by weight based on a total solid content of the epoxy resin and at least one of the amino resin and phenol resin respectively.

4. A metal object-coating method as claimed in claim 1 or 2, wherein the binder component (A) is such that the epoxy resin is in the range of 56 to 98% by weight, the amino resin is in the range of 1 to 22% by weight, and the phenol resin is in the range of 1 to 22% by weight based on a total solid content of the epoxy resin and at least one of the amino resin and phenol resin respectively.

5. A metal object-coating method as claimed in claim 1 or 2, wherein the binder component (B) is such that the polyester resin is in the range of 30 to 98% by weight, the epoxy resin is in the range of 1 to 50% by weight, and the phenol resin is in the range of 1 to 50% by weight based on a total solid content of the polyester resin, epoxy resin and phenol resin respectively.

6. A metal object-coating method as claimed in claim 1 or 2, wherein the inorganic anti-corrosive agent is in the range of 3 to 200 parts by weight per 100 parts by weight of a resin solid content in the primer composition.

7. A metal object-coating method as claimed in claim 1, wherein the α-olefin·α,β-ethylenically unsaturated carboxylic acid copolymer resin is an ethylene·acrylic acid copolymer resin.

8. A metal object-coating method as claimed in claim 1, wherein an amount of the α,β-ethylenically unsaturated carboxylic acid in the copolymer resin is 5 to 30% by weight based on a total amount of the monomers of the copolymer resin.

9. A metal object-coating method as claimed in any one of claims 1 to 8, wherein the inorganic anti-corrosive agent is at least one anti-corrosive pigment selected from the group consisting of a condensed phosphate based anti-corrosive agent, molybdate based anti-corrosive agent and silica.

10. A metal object-coating method as claimed in claim 9, wherein the inorganic anti-corrosive agent is at least one pigment selected from the group consisting of a pigment prepared by treating the surface of aluminum dihydrogen tripolyphosphate with magnesium hexasilicate, a magnesium phosphate based anti-corrosive pigment and an amorphous silica.

11. A primer composition used in the method as claimed in any one of claims 1 to 10.

12. A metal object coated by the method as claimed in any one of claims 1 to 10.
